# FASCICULE DE BREVET EUROPEEN

(11) **EP 3 357 201 B1**
(45) Date de publication et mention de la délivrance du brevet: **07.09.2022**
(21) Numéro de dépôt: 16785214.4
(22) Date de dépôt: 23.09.2016
(51) Int. Cl.: H04L 12/28, H04N 21/436, H04W 4/00

(54) **PROCEDE DE COMMANDE LOCALE D'UN DISPOSITIF ELECTRONIQUE**
VERFAHREN ZUR LOKALEN STEUERUNG EINER ELEKTRONISCHEN VORRICHTUNG
METHOD FOR LOCAL CONTROL OF AN ELECTRONIC DEVICE

(30) Priorité: 30.09.2015 FR 1559286
(43) Date de publication de la demande: 08.08.2018
(73) Titulaire: Orange, 92130 Issy-les-Moulineaux (FR)
(72) Inventeur: BRUNEL, Laurent, 35150 Pire Sur Seiche (FR); BRICHETEAU, Dimitri, 35000 Rennes (FR)
(86) Numéro de dépôt international: PCT/FR2016/052413
(87) Numéro de publication internationale: WO 2017/055715

(56) Documents cités:
- EP-A1- 2 701 407
- US-A- 5 313 670
- US-A1- 2002 060 701
- US-A1- 2002 130 834
- US-A1- 2002 130 834
- US-A1- 2012 268 286
- US-A1- 2014 108 677
- US-A1- 2015 029 880
- US-B1- 8 498 572

## Description

### Domaine technique

La présente invention concerne le domaine de l'électronique. Plus particulièrement, la présente invention concerne l'interopérabilité de dispositifs électroniques pour faire bénéficier un dispositif électronique des fonctionnalités d'un autre dispositif électronique, appelé ici terminal, disposant d'un moyen de restitution pour un utilisateur.

### Etat de la technique

Certains dispositifs électroniques, comme par exemple les passerelles domestiques (ou « Box » en terminologie anglo-saxonne), les décodeurs numériques (ou « Set Top Box » en terminologie anglo-saxonne), les objets domestiques (réfrigérateurs, radiateurs électriques, etc.), possèdent un petit écran, ou en sont dépourvus. Il est donc difficile de connaître leurs données internes (état, capacités, modes de contrôle, etc).

Il est connu d'obtenir de telles données via un réseau de communication, notamment un réseau local domestique. Le document US 2014/0108677 A1 décrit par exemple un système dans lequel un terminal d'un réseau local peut se connecter à un dispositif maître pour recevoir une description du dispositif via un protocole de réseau local (UPnP).

Mais certains appareils ne sont pas connectés à un réseau de communication (par exemple un réfrigérateur disposant de capacités « intelligentes » peut être connecté ou non au réseau local de la maison). Pour d'autres, bien qu'ils soient connectés au réseau de communication (par exemple une passerelle domestique ou une STB), il n'est pas toujours souhaitable de les contrôler ou d'obtenir leurs données internes via ce réseau, notamment pour des raisons de simplicité : le contrôle d'un dispositif du réseau local suppose de le connaître (via, par exemple, une étape de découverte).

Le document US 2002/130834 A1(MADARASZ RICHARD L [US] ET AL) 19 septembre 2002 (2002-09-19) a trait à un procédé de commande d'u dispositif électronique.

Le document EP2701407 A1 divulgue un procédé de gestion d'un dispositif communicant avec un terminal et comprenant l'association automatique et l'établissement d'un lien de communication entre le dispositif et le terminal suite à l'échange de configuration par un lien de communication en champs proche (NFC). Un interface graphique pour le dispositif est ainsi présenté sur le terminal.

L'invention offre une solution ne présentant pas les inconvénients de l'état de la technique.

### L'invention

A cet effet, selon un aspect fonctionnel, l'invention a pour objet un procédé de gestion tel que défini dans la revendication 1.

Aujourd'hui, les terminaux mobiles (*smartphones*, tablettes, etc.) sont équipés d'un processeur et de capacités de restitution confortables ; ils peuvent être avantageusement utilisés pour une restitution, par exemple l'affichage, de données issues d'un autre dispositif.

Avantageusement, l'invention offre l'avantage de déporter localement une interface d'utilisateur sur un tel terminal mobile (e.g. un *smartphone*) qui se trouve à proximité du dispositif électronique, dès que ce terminal entre dans la portée du dispositif, c'est-à-dire dès que la réception du signal par le dispositif peut s'effectuer correctement. Cette notion de portée, qui se traduit par une distance minimale à respecter entre les deux équipements, dépend des contraintes de la technologie radio utilisée et du niveau de sécurité à respecter. Par exemple on peut se baser sur une technologie sans contact utilisant des technologies radio à courte distance, notamment de type RFID (d'après l'anglais Radio Frequency IDentification) ou NFC (pour « Near Field Communication), ou des technologies radio de type Bluetooth, Wi-Fi, etc. Il est ainsi possible de contrôler localement, par la réception de son interface, un dispositif électronique quelconque en approchant simplement le terminal mobile dudit dispositif.

Par interface utilisateur (aussi appelée IHM, pour Interface Homme Machine) d'un dispositif électronique, on entend l'ensemble des informations et mécanismes matériels et logiciels permettant à un utilisateur de communiquer avec le dispositif. Il peut s'agir ici, indifféremment d'une interface textuelle (utilisant des caractères semi-graphiques pour afficher les menus, les boites de dialogue, des messages, ou tout autre élément à destination de l'utilisateur), d'une interface graphique (pour laquelle les objets à manipuler sont présentés sous forme de pictogrammes sur lesquels l'usager peut imiter des manipulations physiques), d'une interface de type Web (une interface graphique d'une application Web, se manipulant à l'aide d'un navigateur Web), ou encore d'une interface vocale, etc.

Il existe des solutions et des normes associées pour déporter une interface utilisateur d'un dispositif vers un terminal dans le contexte du réseau local. Par exemple, le protocole RVU (pour « Remote view »), basé sur les normes UPnP (de l'anglais « Universal Plug and Play » ) et DLNA (de l'anglais « Digital Living Network Alliance »), qui permettent de partager des contenus audiovisuels entre les serveurs de contenus et les terminaux d'un réseau domestique, propose des spécifications techniques autorisant une restitution fidèle des interfaces utilisateurs sur les différents dispositifs du réseau.

Cependant, le but recherché par ces solutions étant de déporter l'affichage du dispositif en vue d'une surveillance, d'une restitution ou d'une commande à distance (par exemple pour piloter les radiateurs, ou la *box,* depuis l'extérieur de la maison, visualiser un contenu audiovisuel sur un PC, etc.), le terminal mobile et le dispositif sont généralement assez éloignés l'un de l'autre (typiquement de quelques mètres à quelques dizaines de mètres dans une maison, voire à une distance supérieure si l'utilisateur n'est pas dans son domicile) et communiquent via un réseau de communication (réseau local et/ou étendu).

Dans le contexte de l'invention, il n'est pas utile que le dispositif soit connecté au réseau local. Avantageusement, l'utilisateur s'affranchit ainsi d'une étape de découverte, puisqu'il lui suffit de s'approcher suffisamment du dispositif visé. De plus, le terminal et le dispositif peuvent être déconnectés, pendant la mise en œuvre de l'invention, de tout réseau de communication.

Selon un mode de mise en oeuvre particulier de l'invention, un procédé de gestion tel que décrit ci-dessus est en outre caractérisé en ce que l'étape de détection comporte une sous-étape d'évaluation d'une distance entre le dispositif et le terminal.

Avantageusement selon ce mode, une certaine proximité est exigée pour que la communication puisse être établie entre le dispositif et le terminal. Notamment, si la portée du dispositif est trop élevée pour que le terminal soit considéré « à proximité », une mesure de distance permet de compléter cette notion de proximité : le terminal doit être dans la portée et de surcroît à une distance maximale du dispositif. Par exemple, dans le contexte d'une communication Wi-Fi, la portée peut atteindre plusieurs dizaines de mètres, ce qui ne permet pas d'associer cette portée à une notion de proximité dans le sens de l'invention. La restriction à quelques centimètres, ou dizaines de centimètres, qui définit dans ce cas la proximité au sens de l'invention, permet de ne déporter l'interface graphique que lorsque le mobile de l'utilisateur se trouve réellement à proximité du dispositif. Avantageusement, cette distance est variable et peut être définie à l'initialisation du dispositif, ou en cours de fonctionnement, etc. L'évaluation la distance peut être classiquement effectuée selon un exemple par une mesure de la puissance du signal reçu lors de l'étape de réception. Cette évaluation dépend de la technologie utilisée.

Selon un second mode de mise en œuvre particulier de l'invention, qui pourra être mis en œuvre cumulativement ou alternativement avec le précédent, le procédé est caractérisé en ce que l'étape de détection comporte une sous-étape de détection d'un mouvement prédéterminé du terminal correspondant à un geste volontaire de l'utilisateur et en ce que l'étape de transmission des données d'interface utilisateur n'est effectuée qu'après détection dudit mouvement prédéterminé..

Avantageusement selon ce mode, un geste volontaire de l'utilisateur, entraînant un mouvement prédéterminé du terminal (rotation, accélération, approche rapide, contact avec le dispositif, etc.) est exigée pour que la communication puisse être établie entre le dispositif et le terminal. La mesure du mouvement peut être classiquement effectuée par une mesure des caractéristiques du signal reçu lors de l'étape de réception. La mesure dépend de la technologie utilisée et du contexte d'utilisation. Par exemple, une approche rapide se traduit par une augmentation rapide de la puissance du signal radio, qui peut être analysée par le dispositif. Selon un autre exemple, le terminal lui-même peut transmettre avec le signal une information de validation (le terminal peut utiliser un gyroscope pour déterminer une rotation, ou l'utilisateur appuyer sur un bouton pour valider son geste d'approche, ou prononcer un mot, etc.). Avantageusement selon ce mode, on s'assure, par un geste volontaire de l'utilisateur, de ne pas transmettre inutilement l'interface à un terminal qui se serait approché de manière involontaire, ou dans un autre but que celui de recevoir l'interface graphique, du dispositif.

Selon un troisième mode de mise en œuvre particulier de l'invention, qui pourra être mis en œuvre cumulativement ou alternativement avec les précédents, le procédé est caractérisé en ce que l'étape de détection comporte une sous-étape de réception d'une requête de restitution en provenance du terminal.

Avantageusement selon ce mode, le dispositif ne transmet les données d'interface que lorsqu'il a reçu une requête spécifique du terminal. On s'assure ainsi de ne pas transmettre inutilement l'interface à un terminal qui se serait approché de manière involontaire, ou dans un autre but que celui de recevoir l'interface graphique, du dispositif.

Selon un quatrième mode de mise en œuvre particulier de l'invention, qui pourra être mis en œuvre cumulativement ou alternativement avec les précédents, le procédé est caractérisé en ce qu'il comporte en outre, préalablement à l'étape de transmission, une étape d'émission d'un signal comportant une requête de restitution à destination du terminal.

Avantageusement selon ce mode, une requête est envoyée au terminal avant de lui transmettre l'interface, ce qui évite de transmettre l'interface à un terminal qui se serait approché de manière involontaire, ou dans un autre but que celui de recevoir l'interface graphique, du dispositif. Cette requête peut s'accompagner d'une demande particulière, par exemple que le terminal effectue un mouvement prédéterminé, ou effectue une action particulière.

Selon un cinquième mode de mise en œuvre particulier de l'invention, qui pourra être mis en œuvre cumulativement ou alternativement avec les précédents, le procédé est caractérisé en ce qu'il comporte en outre, préalablement à l'étape de transmission, une étape d'établissement d'une session de communication en point à point avec le terminal sur un second lien radio pour la transmission des données d'interface utilisateur.

Ce mode de mise en œuvre de l'invention permet d'assurer une gestion fiable du dispositif : la communication en point à point limite la connaissance des données échangées au dispositif électronique et au terminal qui se trouve à proximité. Avantageusement, le dispositif n'a pas besoin d'être connecté à un réseau local. Avantageusement encore, les données ne sont pas nécessairement transmises sur un réseau de communication mais uniquement échangées entre les deux appareils (terminal et dispositif). Ainsi les données échangées sur la session en point à point ne peuvent pas être interceptées par un autre dispositif, qui se trouverait par exemple en espion sur le réseau local.

Selon une variante de ce mode de mise en œuvre particulier de l'invention, le procédé est caractérisé en ce que le second lien radio est distinct du premier lien radio.

Avantageusement selon ce mode, il est possible de changer de technologie radio pour transmettre les données de l'interface graphique au terminal. Par exemple, la communication peut être initiée en NFC (c'est-à-dire que le premier signal, signalant la présence du terminal dans la portée du dispositif, est émis en champ proche) et les données d'interface sont échangées par la suite en Bluetooth. On peut ainsi s'affranchir avantageusement des inconvénients de la première technologie de communication utilisée tout en bénéficiant de ses avantages. Selon l'exemple, la portée du NFC est limitée à quelques centimètres, ce qui est particulièrement intéressant pour la phase d'approche (la portée très faible du NFC oblige l'utilisateur à s'approcher très près du dispositif, voire à le toucher, ce qui valide naturellement son mouvement comme étant volontaire) mais peut se révéler restrictif par la suite, car l'utilisateur doit rester physiquement très proche, voire en contact, avec le dispositif, alors que le Bluetooth autorise à se tenir à distance plus élevée ; de surcroît le NFC ne permet pas d'échanger des données volumineuses, au contraire du Bluetooth.

Selon un mode de mise en œuvre de l'invention les données d'interface utilisateur sont adaptées en fonction des capacités du terminal.

Ce mode de mise en œuvre de l'invention permet d'adapter les données de l'interface graphique aux capacités du terminal qui va les restituer, par exemple en termes d'affichage : si le terminal est doté d'un grand écran, il peut afficher davantage d'informations intelligibles pour l'utilisateur. Si le terminal est au contraire doté d'un petit écran, il est intéressant de lui adresser des données minimales à afficher. Un tel procédé d'adaptation est bien connu de l'homme du métier, par exemple dans les spécifications de la norme RVU précitée. Les capacités du terminal peuvent être par exemple transmises par celui-ci au dispositif lors de l'étape d'établissement de la session de communication.

Selon un autre mode de mise en œuvre particulier de l'invention, qui pourra être mis en œuvre alternativement ou cumulativement avec les précédents, les données de l'interface utilisateur sont encodées à l'aide d'un langage de balisage utilisant une sémantique adaptée à la description des éléments de l'interface utilisateur, avant d'être transmises au terminal.

Ce mode de mise en œuvre de l'invention permet de transmettre simplement au terminal des données facilement affichables, par exemple sous forme de langage XML/HTML, etc. Des données de ce type sont interprétables par la plupart des normes ou standards existants. Il est de surcroît plus facile de s'adapter, avec ce genre de données, aux capacités du terminal.

Selon un autre mode de mise en œuvre particulier de cet aspect de l'invention, qui pourra être mis en œuvre alternativement ou cumulativement avec les précédents, le procédé de gestion est en outre caractérisé en ce qu'il comporte une étape de réception d'une commande en provenance du terminal.

Avantageusement, la session de communication établie entre le dispositif électronique et le terminal peut être mise à profit pour échanger des commandes sélectionnées par un utilisateur via l'interface utilisateur qui a été restituée sur son terminal. Cette commande peut être générée en appuyant sur un bouton, touche, etc., pour commander au dispositif d'effectuer une action. Il peut s'agir par exemple d'une commande dans le but de réduire la température du dispositif (radiateur, réfrigérateur, etc.), modifier un paramètre du dispositif (configuration d'une passerelle, d'une STB, ....), etc.

Selon une variante du cinquième mode de mise en œuvre particulier de l'invention, le procédé comporte en outre une étape de fermeture de la session de communication.

Avantageusement, ce mode de réalisation permet de fermer explicitement la session entre le terminal et le dispositif. Cette action peut être nécessaire si le terminal ou le dispositif souhaitent réinitialiser une autre session (par exemple Wi-Fi direct) en utilisant la même technologie, ou si le dispositif souhaite se rendre disponible pour un autre terminal, etc.

Selon un aspect matériel, l'invention concerne également un dispositif électronique tel que défini dans la revendication 9.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également une équipement domestique comportant un dispositif électronique tel que décrit ci-dessus.

Par équipement domestique, on entend ici tout dispositif de la maison qui permet à un utilisateur d'interagir via une IHM (passerelle domestique, STB, machine à laver, réfrigérateur, etc.), en particulier les équipements qui ne disposent pas d'écran de taille suffisante pour afficher les données requises.

Selon encore un autre aspect matériel, l'invention concerne un système comprenant un dispositif électronique tel que décrit ci-dessus et un terminal comportant :
- un module de communication apte à émettre un signal sur un premier lien radio ;
- un module de traitement apte à traiter des données reçues d'interface utilisateur et
- un module de restitution pour interagir avec un utilisateur.

Selon un autre aspect matériel, l'invention concerne également un programme d'ordinateur apte à être mis en œuvre pour le procédé de gestion locale d'un dispositif électronique tel que décrit ci-dessus, le programme comprenant des instructions de code qui, lorsque le programme est exécuté par un processeur du dispositif électronique., réalise les étapes du procédé.

Ce dispositif de gestion locale et ce programme d'ordinateur présentent des caractéristiques et avantages analogues à ceux décrits précédemment en relation avec le procédé de gestion locale d'un dispositif électronique.

L'invention sera mieux comprise à la lecture de la description qui suit, donnée à titre d'exemple et faite en référence aux dessins annexés.

### Les figures:

La figure 1 illustre un dispositif électronique commandé localement par un terminal mobile selon un mode de réalisation.
La figure 2 représente une architecture matérielle d'un dispositif électronique commandé localement par un terminal mobile et dudit terminal mobile selon un mode de réalisation.
La figure 3 représente un organigramme illustrant les différentes étapes du procédé sur le dispositif électronique et sur le terminal mobile qui le contrôle localement, selon un mode de réalisation.

### Description détaillée d'un exemple de réalisation illustrant l'invention

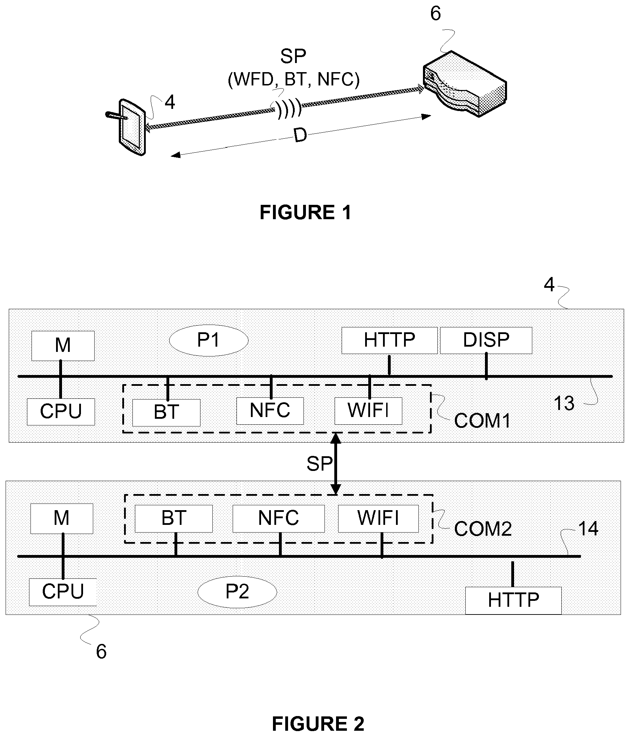

La figure 1 illustre un dispositif électronique (6) commandé localement par un terminal mobile (4) selon un mode de réalisation.

Selon ce mode de réalisation, le dispositif électronique est une passerelle de service (6) et l'interface utilisateur (IHM) à déporter sur le terminal est une interface de gestion de la passerelle.

Une communication est établie entre le terminal mobile et le dispositif électronique : la communication, que l'on appelle aussi par la suite « session point à point », symbolisée par la double flèche (SP), s'effectue selon cet exemple en mode point à point bidirectionnel. Cette communication est locale, c'est-à-dire qu'elle est limitée à une certaine distance entre les deux équipements, cette distance variant selon la technologie utilisée. Elle peut être basée sur différentes technologies radio « de proximité » :
- communication en mode dit « ad-hoc » entre deux équipements pourvus d'une fonction Wi-Fi. En mode « ad-hoc », aussi appelé «Wi-Fi-Direct » (WFD), et par opposition au mode « infrastructure », les dispositifs sans fils se connectent les uns aux autres afin de constituer des liaisons point à point (« peer to peer » en anglais), c'est-à-dire un réseau dans lequel chaque dispositif joue en même temps le rôle de client et le rôle de serveur, ou point d'accès. Le mode «Wi-Fi Direct », aussi appelé Wi-Fi P2P (Peer to Peer), est une technologie développée par le consortium «Wi-Fi Alliance » permettant le partage de données entre différents périphériques (ordinateurs, TV, mobiles, etc.) via leur connexion Wi-Fi sans point d'accès Wi-Fi intermédiaire (routeur, passerelle, etc.). Par exemple, selon ce mode de réalisation, le terminal est configuré pour se positionner en mode Wi-Fi (dit « Hotspot » c'est-à-dire qu'il se positionne comme un point d'accès Wi-Fi). Le dispositif électronique, dont le module Wi-Fi est également actif, détecte sa présence et se met en «Wi-Fi direct », ouvrant ainsi une session entre les deux dispositifs. Ce mode de réalisation procure l'avantage de permettre l'échange des données via un canal sécurisé. La technologie Wi-Fi est en effet, de manière générale, bien connue de l'homme du métier pour ses capacités à offrir une bonne sécurité sur le canal si elle est configurée soigneusement. Elle est robuste, fiable et rapide. Elle possède en revanche une portée assez élevée (supérieure à dix mètres) et autorise de ce fait un éloignement assez important des deux dispositifs. Il est donc préférable, si le signal initial du terminal est reçu en Wi-Fi, de s'assurer qu'il est positionné à proximité du dispositif, c'est-à-dire à une distance inférieure à un certain seuil, qui peut avoir été défini par avance sur le dispositif, ou faire partie d'une norme, etc.
- communication de type Bluetooth (BT) ; La technologie Bluetooth est une technologie radio de courte distance destinée à simplifier les connexions entre les appareils électroniques, développée par l'association « Bluetooth SIG ». Elle est particulièrement répandue et utile pour établir une connexion point à point entre appareils proches. Elle est d'utilisation très simple, consomme peu d'énergie et est néanmoins sécurisée.
- communication en champ proche, par exemple de type NFC (Near Field Communication) ; ces communications, basées principalement sur la norme ISO (International Standard Organisation) 14443, utilisent des technologies sans fils pour permettre un échange d'informations entre deux périphériques éloignés d'une courte distance, typiquement inférieure à dix centimètres.

Alternativement, ce canal peut être établi par tous les moyens à la portée de l'homme du métier : on peut citer par exemple l'infrarouge (RF), le protocole Zigbee (un protocole qui permet la communication dans des réseaux locaux, sur un lien radio, avec une consommation réduite), la norme « DECT Ultra Low Energy » (en abrégé DECT ULE, une extension de DECT pour les applications à basse énergie), ou encore la norme « Bluetooth Low Energy » (en abrégé BLE), dont le but est de fournir une puissance réduite par rapport aux applications standard de la norme Bluetooth, etc.

Ce type de communication dite « locale » entre les deux dispositifs étant privée, puisque établie en point à point, elle présente un certain nombre d'avantages, notamment en termes de sécurité, mais surtout, il n'est pas nécessaire que les équipements soient connectés à un réseau.

Selon une variante, ce canal peut être établi en mode de diffusion (broadcast) : le dispositif peut diffuser son IHM vers plusieurs terminaux.

Lorsque le dispositif détecte que le terminal est dans sa portée, c'est-à-dire qu'il reçoit correctement le signal, il peut préparer les données de l'interface graphique à transmettre, après une étape optionnelle de mesure de la proximité du terminal. En effet, si le terminal, dans le contexte du Wi-Fi ou du Bluetooth, est éloigné de plusieurs mètres, on ne peut raisonnablement supposer que l'utilisateur souhaite recevoir automatiquement l'interface de ce dispositif pour le restituer. Il doit, dans le contexte de l'invention, s'en approcher pour rendre son souhait explicite. Cette mesure est cependant optionnelle, notamment dans le cas du NFC, pour lequel la portée est naturellement limitée à quelque centimètres.

Une session de communication locale peut alors être établie entre les deux équipements ; selon ce mode de réalisation de l'invention, le session est établie sur le même canal (Wi-Fi, Bluetooth ou NFC) que celui qui a été utilisé pour la requête. Selon une variante cependant, la session point à point peut être établie selon un autre mode de communication, par exemple en Wi-Fi, alors que la requête initiale avait eu lieu en NFC.

Le dispositif électronique peut transmettre les données relatives à son IHM. Le terminal mobile reçoit les données, affiche l'interface pour un utilisateur et attend une commande éventuelle de la part de celui-ci (baisser la température, modifier la configuration de la Box, etc.)

A la fin de la session de communication, une déconnexion explicite ou implicite peut avoir lieu. La déconnexion est explicite dans le cas d'une liaison Wi-Fi préalable, car le dispositif électronique ne peut se connecter à la fois en point à point en mode «Wi-Fi Ad-hoc » au terminal mobile et en mode «Wi-Fi infrastructure » à une passerelle de service. Il est donc préférable de le déconnecter. La déconnexion est facultative dans le cas du Bluetooth. La déconnexion de deux dispositifs Bluetooth est généralement implicite (si les deux appareils s'éloignent d'une portée supérieure à la portée maximale permise par la norme). Elle est également facultative dans le cas du NFC car le champ électromagnétique décroît avec la distance, mettant fin naturellement à la communication lorsque le terminal n'est plus dans la portée du dispositif.

La figure 2 représente une architecture matérielle d'un dispositif électronique commandé localement par un terminal mobile et dudit terminal mobile selon un mode de réalisation.

Le terminal mobile (4) comprend, classiquement, des mémoires M articulées autour d'un processeur CPU. Les mémoires peuvent être de type ROM (de l'anglais Read Only Memory) ou RAM (de l'anglais Random Access Memory), amovibles ou fixes, etc. La mémoire vive permet de stocker de manière non durable des données de calcul utilisées lors de la mise en œuvre d'un procédé selon des modes de réalisation. La mémoire non volatile (par exemple du type EEPROM) permet de stocker par exemple un programme d'ordinateur selon un mode de réalisation pour son exécution par un processeur. Il communique avec le dispositif électronique (6) via un module de communication (COM1) qui lui permet de se connecter sans fils via un canal radio de type Wi-Fi, Bluetooth (BT), NFC ou encore Zigbee (non représenté), etc. Comme décrit auparavant à l'appui de la figure 1, un canal de communication point à point (SP) est établi selon cet exemple entre les deux dispositifs (4) et (6). On pourrait envisager alternativement une communication multipoint du dispositif vers plusieurs terminaux. Le terminal comporte aussi, selon cet exemple, un module de communication de type HTTP pour assurer les communications de type HTTP, par exemple de type WebSocket (WS) ; on notera qu'une communication de type WS est possible sur un lien Bluetooth.

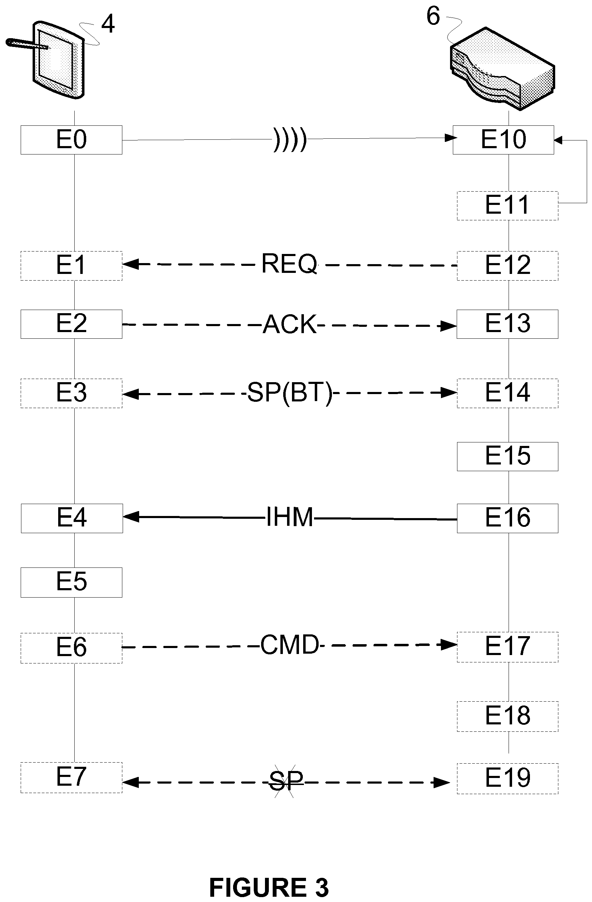

Le module P1, qui peut être logiciel et/ou matériel, est notamment capable d'effectuer les actions qui seront décrites à l'appui de la figure 3, c'est-à-dire l'envoi des requêtes et commandes à destination du dispositif électronique ainsi que le traitement des données d'interface utilisateur, conformément à des procédés selon des modes de réalisation.

En outre, le terminal comporte une interface utilisateur comme par exemple un pavé de touches (non représenté) pour recevoir des commandes d'un utilisateur et un écran (DISP) pour restituer l'interface utilisateur du dispositif électronique.

Tous ces modules communiquent classiquement entre eux via un bus de données (13).

Le dispositif électronique (6) comprend aussi des mémoires M articulées autour d'un processeur CPU. Il se connecte au terminal mobile viai la liaison SP en mode Wi-Fi ou Bluetooth, etc. via son module de communication COM2 similaire au module précédemment décrit COM1.

Il comporte aussi un module (P2) chargé du traitement des informations : établissement de la communication avec le terminal mobile, réception des commandes de contrôle ou des requêtes de restitution de la part du terminal mobile, préparation (mise en forme, codage, etc.) des données d'interface utilisateur, transmission de l'interface utilisateur au terminal, etc.

Il comporte aussi éventuellement un module de communication de type HTTP.

Tous les modules communiquent classiquement entre eux via un bus de données (14).

La figure 3 représente un organigramme illustrant les différentes étapes du procédé selon un mode de réalisation sur le dispositif électronique (6) et un exemple de procédé correspondant sur le terminal mobile (4).

Le but des étapes est d'établir une communication entre le terminal mobile (4) et le dispositif électronique (6) afin de transmettre l'interface utilisateur (IHM) du dispositif au terminal lorsque celui-ci se trouve à portée du dispositif.

Lors d'une étape E0, le terminal s'approche du dispositif électronique. Le terminal émet un signal radio à destination du dispositif. On notera que dans le cas du NFC, le terminal ne peut, s'il est passif, émettre de signal avant d'être placé dans le champ du dispositif.

Selon cet exemple, on suppose que l'équipement est à l'initiative de l'établissement de la communication entre les deux appareils.

Le dispositif électronique est positionné lors de l'étape E10 en mode de réception (Wi-Fi « hotspot », bluetooth, NFC, etc.). Par exemple, l'utilisateur positionne volontairement le dispositif dans ce mode (on peut imaginer un bouton logiciel ou matériel, une commande, etc.). Selon un autre exemple, le dispositif est toujours en mode de réception.

Lorsque le terminal entre dans la portée du dispositif, celui-ci reçoit correctement le signal radio. Il peut alors valider l'étape de détection du terminal au cours d'une étape E11. Optionnellement, le dispositif peut aussi effectuer, à l'étape E11, une étape complémentaire pour la validation de la détection du terminal, notamment une évaluation de la distance à laquelle se trouve le terminal.

Tant que la détection n'est pas terminée, les étapes suivantes ne sont pas effectuées. Lorsque le terminal est détecté, une étape E12 optionnelle permet au dispositif de transmettre une requête (REQ) au terminal. Cette requête est utile pour recevoir lors d'une étape E13 successive un message d'acquittement que le terminal a émis lors de l'étape E2, afin de s'assurer que l'utilisateur souhaite réellement recevoir les données d'interface, et que le terminal n'a donc pas été détecté par erreur. Optionnellement, le dispositif peut effectuer, à l'étape E13, une étape complémentaire de détection du terminal, par exemple en mesurant un geste volontaire de la part de l'utilisateur, se traduisant par un mouvement prédéterminé du terminal (rotation, accélération, etc.), un signal sonore, etc.

Selon une variante, les étapes présentées précédemment, dans lesquelles l'équipement détecte et accepte le terminal, sont inversées de manière à ce que l'établissement de la session soit à l'initiative du terminal. Le terminal effectue alors les étapes de détection (et éventuellement, les étapes facultatives d'évaluation de distance et de requête) qui sont dans l'exemple précédemment décrit à la charge du dispositif (étapes E10, E11, E12, E13).

A l'étape suivante E14 (resp. E3 pour le terminal), une session de communication point à point (SP) est établie entre les deux entités. On notera que cette session peut être établie sur un canal radio différent du premier. Selon quelques exemples intéressants :
- le premier canal, utilisé pour la détection du terminal, est un canal NFC, et le second canal, utilisé pour l'échange des données, est un canal Wi-Fi ou BT. Cette succession permet d'avoir une détection très simple du terminal (puisque la portée du NFC est naturellement très réduite) suivie d'une phase de communication au cours de laquelle le terminal peut être plus éloigné du dispositif et le volume des données échangées plus important.
- le premier canal, utilisé pour la détection du terminal, est un canal Bluetooth, et le second canal, utilisé pour l'échange des données, est un canal Wi-Fi.
- etc.

Selon une variante, la communication est établie en mode de diffusion (en anglais Broadcast) de manière à ce que l'interface du dispositif soit transmise à plusieurs terminaux détectés dans la portée du dispositif.

Lors d'une étape E15, le dispositif électronique traite la requête, c'est-à-dire qu'il prépare les données d'interface utilisateur, par exemple d'interface graphique.

Puis les données de l'interface sont transmises au terminal lors d'une étape E16. Le terminal les reçoit lors d'une étape E4 ; il traite alors ces données lors d'une étape E5 et les restitue : selon cet exemple, il affiche l'interface graphique sur son écran (DISP). Selon une variante, il peut s'agir d'une interface Web, d'une interface vocale restituée via un haut-parleur, etc.

L'unité de traitement du terminal émet optionnellement une ou des commandes lors d'une étape E6 (CMD), via son module de communication. Le module de traitement du dispositif reçoit la commande (E17) et opère des traitements pour la convertir en commande effective pour le dispositif (baisser la température, modifier la configuration de la Box, réduire la vitesse d'un moteur, etc.) lors d'une étape E18.

Une fois que l'interface utilisateur a été reçue et exploitée par l'utilisateur, la session point à point (SP) peut être optionnellement refermée lors d'une étape E19 (resp. E7 sur le terminal). La fermeture de la session permet aux deux dispositifs de pouvoir quitter le mode point à point pour établir par exemple une autre session.

Un programme d'ordinateur pour la mise en œuvre d'un procédé selon un mode de réalisation de l'invention peut être réalisé à partir de la présente description détaillée.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention. Notamment :
- L'envoi de l'interface utilisateur pourrait être déclenchée par la détection d'un signal autre que radio (un signal sonore, visuel, etc.) et concerner la détection d'un mouvement particulier, d'un pattern graphique particulier, d'un terminal mobile particulier, d'une empreinte biométrique, etc.
- L'envoi des données peut se faire selon tout autre mode de communication envisageable : radio selon tous les protocoles connus, mais aussi lumière via le LI-FI (une technologie de transmission de données par un équipement de type LED), etc.
- Le transfert des données peut se faire selon différent protocoles et formats, soit standards (de type HTTP et XML) soit propriétaires, avec tous les niveaux d'abstraction possibles pouvant aller jusqu'à l'envoi de données dans un buffer (« frame buffer ») sous forme brute.

## Revendications

1. Procédé de gestion locale d'un dispositif apte à communiquer avec au moins un terminal apte à traiter et restituer des données d'interface utilisateur (IHM) du dispositif, le procédé comportant sur le dispositif :
Positionnement (E10) du dispositif en mode de réception sur un premier lien radio ;
détection (E11) de l'entrée dudit au moins un terminal dans la portée du dispositif sur le premier lien radio, le premier lien radio ayant une portée donnée,
préalablement à l'étape de transmission (E16), une étape (E14) d'émission d'un signal comportant une requête (REQ) de restitution à destination du terminal (4) ;
préalablement à l'étape de transmission (E16), une étape d'établissement (E14) d'une communication distinct du premier lien et ayant une portée plus grande que le premier lien avec le terminal sur le second lien radio pour la transmission des données d'interface utilisateur (IHM) ;
une étape d'obtention des capacités du terminal ;
préparation (E15) des données d'interface utilisateur (IHM) du dispositif à transmettre audit terminal détecté dans la portée du dispositif ; l'étape de préparation comprenant l'adaptation des données d'interface utilisateur en fonction des capacités du terminal ;
transmission (E16) desdites données d'interface utilisateur (IHM) audit terminal sur le second lien radio.

2. Procédé selon la revendication 1, **caractérisé en ce que** l'étape de détection comporte une sous-étape (E11) d'évaluation d'une distance entre le dispositif et le terminal.

3. Procédé selon la revendication 1, **caractérisé en ce que** l'étape de détection comporte une sous-étape (E12, E13) de détection d'un mouvement prédéterminé du terminal correspondant à un geste volontaire de l'utilisateur et **en ce que** l'étape de transmission des données d'interface utilisateur n'est effectuée qu'après détection dudit mouvement prédéterminé.

4. Procédé selon la revendication 1, **caractérisé en ce que** l'étape de détection comporte une sous-étape de réception d'une requête de restitution en provenance du terminal.

5. Procédé selon la revendication 1, dans lequel les données d'interface utilisateur sont adaptées en fonction des capacités du terminal.

6. Procédé selon la revendication 1, dans lequel les données de l'interface utilisateur (IHM) sont encodées à l'aide d'un langage de balisage
utilisant une sémantique adaptée à la description des éléments de l'interface utilisateur, avant d'être transmises au terminal.

7. Procédé de communication selon la revendication 1, **caractérisé en ce qu'**il comporte en outre une étape (E17) de réception d'une commande (CMD) en provenance du terminal.

8. Procédé de communication selon la revendication 6, **caractérisé en ce qu'**il comporte en outre une étape (E19) de fermeture de la session de communication.

9. Dispositif électronique apte à communiquer avec au moins un terminal apte à traiter et restituer des données d'interface utilisateur (IHM) du dispositif, comportant :
- un module pour positionner le dispositif en mode de réception sur un premier lien radio ;
- un module de détection (COMM2, NFC, WIFI, BT) de l'entrée dudit au moins un terminal dans la portée du dispositif sur le premier lien radio, le premier lien radio ayant une portée donnée,
- un module d'émission apte à émettre, préalablement à l'étape de transmission (E16), un signal comportant une requête (REQ) de restitution à destination du terminal (4) ;
- un module d'établissement apte à établir, préalablement à l'étape de une communication distinct du premier lien et ayant une portée plus grande que le premier lien avec le terminal sur le second lien radio pour la transmission des données d'interface utilisateur (IHM) ;
- un module d'obtention des capacités du terminal ;
- un module de traitement (P2) configuré pour préparer les données d'interface utilisateur (IHM) suite à la détection de l'entrée du terminal dans la portée du dispositif; l'étape de préparation comprenant l'adaptation des données d'interface utilisateur en fonction des capacités du terminal ;
- transmission (E16) desdites données d'interface utilisateur (IHM) audit terminal sur le second lien radio.
- un module de traitement (P2) configuré pour préparer les données d'interface utilisateur (IHM) suite à la détection de l'entrée du terminal dans la portée du dispositif.
- un module de transmission desdites données d'interface utilisateur (IHM) sur un second lien radio, activé suite à la détection de l'entrée du terminal dans ladite portée, le second lien radio étant distinct du premier lien et ayant une portée plus grande que le premier lien.

10. Equipement domestique comportant un dispositif selon la revendication 9.

11. Système comprenant un dispositif électronique selon la revendication 9 et un terminal comportant :
- un module (COM1) de communication (COM1, NFC, WIFI, BT) apte à émettre un signal sur le premier lien radio;
- un module de traitement (P1) apte à traiter des données reçues d'interface utilisateur et
- un module de restitution pour interagir avec un utilisateur.

12. Programme d'ordinateur comportant des instructions de code pour la mise en œuvre du procédé de gestion locale d'un dispositif électronique conforme à la revendication 1, lorsque celle-ci est exécutée par un processeur du dispositif électronique.

## Patentansprüche

1. Verfahren zur lokalen Verwaltung einer Vorrichtung, die geeignet ist, mit mindestens einem Endgerät zu kommunizieren, das geeignet ist, Benutzerschnittstellendaten (IHM) der Vorrichtung zu verarbeiten und wiederzugeben, wobei das Verfahren auf der Vorrichtung aufweist:
Positionieren (E10) der Vorrichtung im Empfangsmodus auf einer ersten Funkverbindung;
Erfassen (E11) des Eintritts des mindestens einen Endgeräts in die Reichweite der Vorrichtung auf der ersten Funkverbindung, wobei die erste Funkverbindung eine gegebene Reichweite hat,
vor dem Schritt der Übertragung (E16) einen Schritt (E14) des Sendens eines eine Wiedergabeanforderung (REQ) aufweisenden Signals an das Endgerät (4);
vor dem Schritt der Übertragung (E16) einen Schritt des Aufbaus (E14) einer Kommunikation anders als die erste Verbindung und mit einer größeren Reichweite als die erste Verbindung mit dem Endgerät auf der zweiten Funkverbindung für die Übertragung der Benutzerschnittstellendaten (IHM);
einen Schritt des Erhalts der Kapazitäten des Endgeräts;
Vorbereitung (E15) der Benutzerschnittstellendaten (IHM) der Vorrichtung, die an das in der Reichweite der Vorrichtung erfasste Endgerät zu übertragen sind; wobei der Vorbereitungsschritt die Anpassung der Benutzerschnittstellendaten abhängig von den Kapazitäten des Endgeräts enthält;
Übertragung (E16) der Benutzerschnittstellendaten (IHM) an das Endgerät auf der zweiten Funkverbindung.

2. Verfahren nach Anspruch 1, **dadurch gekennzeichnet, dass** der Erfassungsschritt einen Teilschritt (E11) der Ermittlung eines Abstands zwischen der Vorrichtung und dem Endgerät aufweist.

3. Verfahren nach Anspruch 1, **dadurch gekennzeichnet, dass** der Erfassungsschritt einen Teilschritt (E12, E13) der Erfassung einer vorbestimmten Bewegung des Endgeräts entsprechend einer absichtlichen Geste des Benutzers aufweist, und dass der Schritt der Übertragung der Benutzerschnittstellendaten erst nach Erfassung der vorbestimmten Bewegung ausgeführt wird.

4. Verfahren nach Anspruch 1, **dadurch gekennzeichnet, dass** der Erfassungsschritt einen Teilschritt des Empfangs einer vom Endgerät kommenden Wiedergabeanforderung aufweist.

5. Verfahren nach Anspruch 1, wobei die Benutzerschnittstellendaten abhängig von den Kapazitäten des Endgeräts angepasst werden.

6. Verfahren nach Anspruch 1, wobei die Daten der Benutzerschnittstelle (IHM) mit Hilfe einer Markierungssprache codiert werden, die eine Semantik verwendet, die an die Beschreibung der Elemente der Benutzerschnittstelle angepasst wird, ehe sie an das Endgerät übertragen werden.

7. Kommunikationsverfahren nach Anspruch 1, **dadurch gekennzeichnet, dass** es außerdem einen Schritt (E17) des Empfangs eines Befehls (CMD) vom Endgerät aufweist.

8. Kommunikationsverfahren nach Anspruch 6, **dadurch gekennzeichnet, dass** es außerdem einen Schritt (E19) des Schließens der Kommunikationssitzung aufweist.

9. Elektronische Vorrichtung, die geeignet ist, mit mindestens einem Endgerät zu kommunizieren, das geeignet ist, Benutzerschnittstellendaten (IHM) der Vorrichtung zu verarbeiten und wiederzugeben, die aufweist:
- ein Modul, um die Vorrichtung im Empfangsmodus auf einer ersten Funkverbindung zu positionieren;
- ein Modul zur Erfassung (COMM2, NFC, WIFI, BT) des Eintritts des mindestens einen Endgeräts in die Reichweite der Vorrichtung auf der ersten Funkverbindung, wobei die erste Funkverbindung eine gegebene Reichweite hat,
- ein Sendemodul, das geeignet ist, vor dem Übertragungsschritt (E16) ein eine Wiedergabeanforderung (REQ) aufweisendes Signal an das Endgerät (4) zu senden;
- ein Aufbaumodul, das geeignet ist, vor dem Schritt eine Kommunikation anders als die erste Verbindung und mit einer größeren Reichweite als die erste Verbindung mit dem Endgerät auf der zweiten Funkverbindung für die Übertragung der Benutzerschnittstellendaten (IHM) aufzubauen;
- ein Erhaltsmodul der Kapazitäten des Endgeräts;
- ein Verarbeitungsmodul (P2), das konfiguriert ist, die Benutzerschnittstellendaten (IHM) nach der Erfassung des Eintritts des Endgeräts in die Reichweite der Vorrichtung vorzubereiten; wobei der Vorbereitungsschritt die Anpassung der Benutzerschnittstellendaten abhängig von den Kapazitäten des Endgeräts enthält;
- Übertragung (E16) der Benutzerschnittstellendaten (IHM) an das Endgerät auf der zweiten Funkverbindung;
- ein Verarbeitungsmodul (P2), das konfiguriert ist, die Benutzerschnittstellendaten (IHM) nach der Erfassung des Eintritts des Endgeräts in die Reichweite der Vorrichtung vorzubereiten;
- ein Übertragungsmodul der Benutzerschnittstellendaten (IHM) auf einer zweiten Funkverbindung, das nach der Erfassung des Eintritts des Endgeräts in die Reichweite aktiviert wird, wobei die zweite Funkverbindung anders als die erste Verbindung ist und eine größere Reichweite hat als die erste Verbindung.

10. Heimausstattung, die eine Vorrichtung nach Anspruch 9 aufweist.

11. System, das eine elektronische Vorrichtung nach Anspruch 9 und ein Endgerät enthält, das aufweist:
- ein Modul (COM1) zur Kommunikation (COM1, NFC, WIFI, BT), das geeignet ist, ein Signal auf der ersten Funkverbindung zu senden;
- ein Verarbeitungsmodul (P1), das geeignet ist, empfangene Benutzerschnittstellendaten zu verarbeiten, und
- ein Wiedergabemodul, um mit einem Benutzer zu interagieren.

12. Computerprogramm, das Codeanweisungen für die Durchführung des lokalen Verwaltungsverfahrens einer elektronischen Vorrichtung nach Anspruch 1 aufweist, wenn diese von einem Prozessor der elektronischen Vorrichtung ausgeführt wird.

## Claims

1. Method for the local management of a device able to communicate with at least one terminal able to process and render user interface data (IHM) of the device, the method comprising, on the device:
setting (E10) the device to receive mode on a first radio link;
detecting (E11) the entry of said at least one terminal within the range of the device on the first radio link,
the first radio link having a given range,
prior to the transmission step (E16), a step (E14) of sending a signal containing a rendering request (REQ) to the terminal (4);
prior to the transmission step (E16), a step of establishing (E14) a communication distinct from the first link and having a range greater than the first link with the terminal on the second radio link for the transmission of the user interface data (IHM);
a step of obtaining the capabilities of the terminal;
preparing (E15) the user interface data (IHM) of the device to be transmitted to said terminal detected within the range of the device; the preparation step comprising adapting the user interface data based on the capabilities of the terminal;
transmitting (E16) said user interface data (IHM) to said terminal on the second radio link.

2. Method according to Claim 1, **characterized in that** the detection step comprises a substep (E11) of evaluating a distance between the device and the terminal.

3. Method according to Claim 1, **characterized in that** the detection step comprises a substep (E12, E13) of detecting a predetermined movement of the terminal corresponding to an intentional gesture by the user, and **in that** the step of transmitting the user interface data is performed only after said predetermined movement has been detected.

4. Method according to Claim 1, **characterized in that** the detection step comprises a substep of receiving a rendering request from the terminal.

5. Method according to Claim 1, wherein the user interface data are adapted based on the capabilities of the terminal.

6. Method according to Claim 1, wherein the user interface data (IHM) are encoded with the aid of a markup language using semantics adapted to the description of the elements of the user interface before being transmitted to the terminal.

7. Communication method according to Claim 1, **characterized in that** it furthermore comprises a step (E17) of receiving a command (CMD) from the terminal.

8. Communication method according to Claim 6, **characterized in that** it furthermore comprises a step (E19) of closing the communication session.

9. Electronic device able to communicate with at least one terminal able to process and render user interface data (IHM) of the device, comprising:
- a module for setting the device to receive mode on a first radio link;
- a module (COMM2, NFC, WIFI, BT) for detecting the entry of said at least one terminal within the range of the device on the first radio link, the first radio link having a given range,
- a sending module able to send, prior to the transmission step (E16), a signal containing a rendering request (REQ) to the terminal (4);
- an establishment module able to establish, prior to the step, a communication distinct from the first link and having a range greater than the first link with the terminal on the second radio link for the transmission of the user interface data (IHM);
- a module for obtaining the capabilities of the terminal;
- a processing module (P2) configured to prepare the user interface data (IHM) following the detection of the entry of the terminal within the range of the device; the preparation step comprising adapting the user interface data based on the capabilities of the terminal;
- transmitting (E16) said user interface data (IHM) to said terminal on the second radio link,
- a processing module (P2) configured to prepare the user interface data (IHM) following the detection of the entry of the terminal within the range of the device,
- a module for transmitting said user interface data (IHM) on a second radio link, activated following the detection of the entry of the terminal within said range, the second radio link being distinct from the first link and having a range greater than the first link.

10. Domestic equipment comprising a device according to Claim 9.

11. System comprising an electronic device according to Claim 9 and a terminal comprising:
- a communication (COM1, NFC, WIFI, BT) module (COM1) able to send a signal on the first radio link;
- a processing module (P1) able to process received user interface data and
- a rendering module for interacting with a user.

12. Computer program comprising code instructions for implementing the method for the local management of an electronic device according to Claim 1 when it is executed by a processor of the electronic device.
